# EUROPEAN PATENT SPECIFICATION

(11) **EP 4 075 684 B1**
(45) Date of publication and mention of the grant of the patent: **04.11.2026**
(21) Application number: 22165945.1
(22) Date of filing: 20.04.2018
(51) Int. Cl.: H04B 7/12, H04W 16/02, H04L 5/00, H04B 1/713

(54) **METHOD AND APPARATUS FOR DETERMINING FREQUENCY HOPPING FOR A CHANNEL, AND COMPUTER STORAGE MEDIUM**
VERFAHREN UND VORRICHTUNG ZUR BESTIMMUNG VON FREQUENZSPRÜNGEN EINES KANALS UND COMPUTERSPEICHERMEDIUM
PROCÉDÉ ET APPAREIL POUR DÉTERMINER UN SAUT DE FRÉQUENCE DE CANAL ET SUPPORT DE MÉMOIRE INFORMATIQUE

(30) Priority: 08.09.2017 WO PCT/CN2017/101093
(43) Date of publication of application: 19.10.2022
(62) Document number(s) of the earlier application(s) in accordance with Art. 76 EPC: 18854548.7 / 3 657 687
(73) Proprietor: GUANGDONG OPPO MOBILE TELECOMMUNICATIONS CORP., LTD., Dongguan, Guangdong 523860 (CN)
(72) Inventor: LIN, Yanan, Dongguan, 523860 (CN)
(74) Representative: RGTH

(56) References cited:
- WO-A1-2016/025836
- CMCC: "Discussion on subband-based PUCCH resource allocation and indication", vol. RAN WG1, no. Qingdao, P.R. China; 20170627 - 20170630, 26 June 2017 (2017-06-26), XP051299986, Retrieved from the Internet <URL:http://www.3gpp.org/ftp/Meetings_3GPP_SYNC/RAN1/Docs/> [retrieved on 20170626]
- KT CORP: "Considerations on frequency hopping for PUCCH", vol. RAN WG1, no. Prague, Czechia; 20170821 - 20170825, 20 August 2017 (2017-08-20), XP051317252, Retrieved from the Internet <URL:http://www.3gpp.org/ftp/Meetings_3GPP_SYNC/RAN1/Docs/> [retrieved on 20170820]
- APPLE ET AL: "Signaling support for CE mode and bandwidth switch for FeMTC devices", vol. RAN WG2, no. Athens, Greece; 20170213 - 20170217, 20 February 2017 (2017-02-20), XP051237272, Retrieved from the Internet <URL:http://www.3gpp.org/ftp/tsg_ran/WG2_RL2/TSGR2_97/Docs/> [retrieved on 20170220]
- SAMSUNG: "RAN2 consideration for bandwidth part in NR", vol. RAN WG2, no. Qingdao, China; 20170627 - 20170629, 16 June 2017 (2017-06-16), XP051306452, Retrieved from the Internet <URL:http://www.3gpp.org/ftp/tsg_ran/WG2_RL2/TSGR2_AHs/2017_06_NR/Docs/> [retrieved on 20170616]
- VIVO: "Discussion on the activation/deactivation of the bandwidth part", vol. RAN WG1, no. Prague, Czech Republic; 20170821 - 20170825, 20 August 2017 (2017-08-20), XP051315682, Retrieved from the Internet <URL:http://www.3gpp.org/ftp/Meetings_3GPP_SYNC/RAN1/Docs/> [retrieved on 20170820]

## Description

### BACKGROUND

### Technical Field

The present invention relates to frequency hopping technologies in the mobile communications field, and in particular, to a method and an apparatus of determining frequency hopping for a channel, and a computer storage medium.

### Related Art

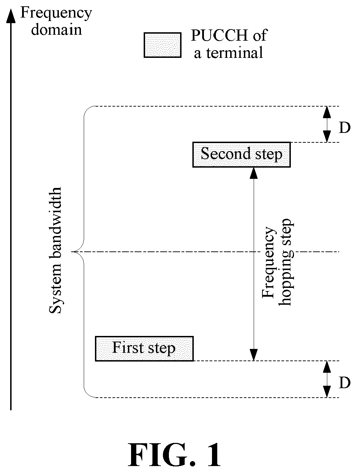

In a long term evolution (LTE, Long Term Evolution) system, a frequency hopping technology may be used for a physical uplink control channel (PUCCH, Physical Uplink Control Channel), to obtain a frequency domain diversity gain, and improve channel transmission performance. In LTE, the first step and the second step of PUCCH frequency hopping are symmetrical about central mirror of system bandwidth. As shown in FIG. 1, a distance between the first step and a lower edge of the system bandwidth is kept to be consistent with a distance between the second step and an upper edge of the system bandwidth, and both distances are D.

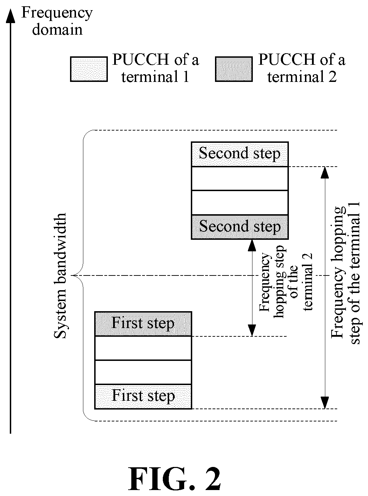

In the foregoing design for the PUCCH frequency hopping, PUCCHs may be distributed on two sides of the system bandwidth, so that a central part of the system bandwidth is left to a data channel, such as a physical uplink shared channel (PUSCH, Physical Uplink Shared Channel), but this causes PUCCH frequency hopping steps of different terminals to be different. As shown in FIG. 2, for some terminals, frequency hopping steps are larger, and PUCCHs are closer to an edge of the system bandwidth, a frequency domain diversity effect is better, and transmission performance is better; and for some other terminals, frequency hopping steps are smaller, PUCCHs are closer to a center of the system bandwidth, a frequency domain diversity effect is poorer, and transmission performance is worse. It can be seen that a conventional design for the PUCCH frequency hopping causes an unstable frequency hopping step, leading to the decline of transmission performance of the PUCCH of part of terminals when a capacity of the PUCCH is relatively large.

WO2016025836 A1 discloses a system where legacy and low-cost WTRUs operate on different bandwidths and place the frequency PUCCH transmissions to different resources, within the respectively available bandwidth.

The 3GPP document entitled "Discussion on subband-based PUCCH resource allocation and indication" discloses a 5G NR system with two types of UEs, which are assigned to 20 and 100 MHz bandwidth, respectively. For UE with reduced bandwidth part, the PUCCH is frequency hopped between the edges of the respective sub-band of 20 MHz. For UE with full bandwidth, the PUCCH can be placed at the edges of 20 or 100 MHz band.

The 3GPP document entitled "Considerations on frequency hopping for PUCCH" discloses that UEs with different bandwidths are assigned respective PUCCH frequency-hopping step sizes, which lie within the assigned bandwidth part.

### SUMMARY

The invention is set out in the appended set of claims. To resolve the foregoing technical problem, embodiments of the present invention provide a method and an apparatus of determining frequency hopping for a channel, and a computer storage medium.

A method of determining frequency hopping for a channel is provided according to independent claim 1. Optional features are set out in dependent claims 2 and 3.

An apparatus of determining frequency hopping for a channel is provided according to independent claim 4. Optional features are set out in dependent claims 5 and 6.

A computer storage medium is provided according to independent claim 7.

In the technical solutions of the embodiments of the present invention, the terminal determines the first bandwidth corresponding to the bandwidth part, where the first bandwidth corresponding to the bandwidth part is less than the second bandwidth corresponding to the system bandwidth; the terminal determines, based on the first bandwidth corresponding to the bandwidth part, the frequency hopping step corresponding to the uplink channel; and the terminal determines, based on the frequency hopping step corresponding to the uplink channel, the frequency domain position used for transmitting the uplink channel. When the technical solutions of the embodiments of the present invention are used, a stable frequency hopping step is implemented when the bandwidth value of the bandwidth part is given, thereby obtaining a more stable frequency domain diversity gain, and improving uplink channel (particularly uplink control channel) transmission performance.

### BRIEF DESCRIPTION OF THE DRAWINGS

The accompanying drawings described herein are used for providing further understanding for the present invention and constitute a part of the present invention. Examples of embodiments of the present invention and descriptions thereof are used for explaining the present invention and do not constitute an improper limitation to the present invention. In the figures:
FIG. 1 is a schematic diagram 1 of an existing PUCCH frequency domain structure;
FIG. 2 is a schematic diagram 2 of an existing PUCCH frequency domain structure;
FIG. 3 is a schematic flowchart of a method of determining frequency hopping for a channel according to an embodiment of the present invention;
FIG. 4 is a schematic diagram 1 of a PUCCH frequency domain structure according to an embodiment of the present invention;
FIG. 5 is a schematic diagram 2 of a PUCCH frequency domain structure according to an embodiment of the present invention;
FIG. 6 is a schematic structural composition diagram 1 of an apparatus of determining frequency hopping for a channel according to an embodiment of the present invention;
FIG. 7 is a schematic structural composition diagram 2 of an apparatus of determining frequency hopping for a channel according to an embodiment of the present invention; and
FIG. 8 is a schematic structural composition diagram of a terminal according to an embodiment of the present invention.

### DETAILED DESCRIPTION

To enable characteristics and technical content of embodiments of the present invention to be understood in a more detailed manner, the following describes implementation of the embodiments of the present invention in detail with reference to the accompanying drawings. The appended accompanying drawings are only for reference and description, and are not used to limit the embodiments of the present invention.

The 5th generation (5G NR) system is a direction of future mobile communications system research. In the 5G NR system, on one hand, to increase flexibility of frequency domain resource allocation, and reduce terminal power consumption, a 5G NR terminal may transmit a signal in a bandwidth part (Bandwidth Part) less than system bandwidth. When bandwidth of the bandwidth part is relatively small, a frequency hopping step of a central PUCCH is further reduced, affecting PUCCH transmission performance. On the other hand, a series of new technologies, such as a new-type multiple-input multiple-output (MIMO, Multiple-Input Multiple-Output) technology, are introduced into 5G NR, a larger quantity of channel state information reports (CSI report) are needed, and PUCCH load is increased by a big margin. Consequently, this causes a PUCCH to occupy a larger proportion of frequency domain resources in the bandwidth part, a frequency hopping step of a PUCCH close to a center of the bandwidth part becomes smaller, and the transmission performance further deteriorates.

Therefore, an embodiment of the present invention provides a channel frequency hopping determining method, to implement a stable frequency hopping step when a bandwidth value of the bandwidth part is given, thereby obtaining a more stable frequency domain diversity gain, and improving uplink channel (particularly uplink control channel) transmission performance.

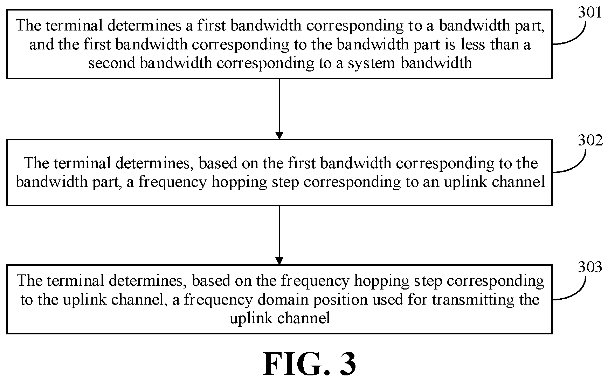

FIG. 3 is a schematic flowchart of a method of determining frequency hopping for a channel according to an embodiment of the present invention. As shown in FIG. 3, the method of determining frequency hopping for a channel includes the following steps.

Step 301: A terminal determines a first bandwidth corresponding to a bandwidth part, where the first bandwidth corresponding to the bandwidth part is less than a second bandwidth corresponding to a system bandwidth.

In this embodiment of the present invention, a type of the terminal is not limited. The terminal may be any type, such as a mobile phone, a notebook computer, a tablet computer, a desktop computer, an in-vehicle terminal, or a smart home terminal.

In this embodiment of the present invention, a bandwidth supported by a base station is referred to as a system bandwidth, that is, the second bandwidth. In LTE, the terminal may transmit a signal in an entire system bandwidth range. In a 5G NR system, the terminal transmits a signal only in a part of the system bandwidth. Herein, the part of the system bandwidth is referred to as the bandwidth part. Resource utilization efficiency of the system bandwidth can be effectively improved by using the bandwidth part.

In this embodiment of the present invention, an uplink channel may be transmitted in a frequency hopping manner. Using an example in which frequency hopping includes two steps, a difference in frequency domain between the first step of frequency hopping and the second step of frequency hopping is a frequency hopping step. A size of the frequency hopping step determines a frequency domain diversity gain of the uplink channel. A larger frequency hopping step indicates a larger frequency domain diversity gain of the uplink channel. On the contrary, a smaller frequency hopping step indicates a smaller frequency domain diversity gain of the uplink channel. To obtain a stable and relatively large frequency domain diversity gain, in this embodiment of the present invention, the frequency hopping step corresponding to the uplink channel is determined based on the first bandwidth corresponding to the bandwidth part, to improve uplink channel (particularly uplink control channel) transmission performance.

Specifically, the terminal needs to first determine the first bandwidth corresponding to the bandwidth part. Apparently, the first bandwidth corresponding to the bandwidth part is less than the second bandwidth corresponding to the system bandwidth.

In an embodiment of the present invention, the terminal receives first configuration information, and determines, based on the first configuration information, the first bandwidth corresponding to the bandwidth part.

Herein, that the terminal receives first configuration information may be implemented in the following two manners:
Manner 1: The terminal receives RRC signaling that carries the first configuration information.
Manner 2: The terminal receives system information carrying the first configuration information.

In the foregoing solution, the terminal may receive one or more pieces of first configuration information. Herein, a meaning of more is being greater than or equal to two.

The terminal determines, based on one piece of first configuration information when receiving the one piece of first configuration information, the first bandwidth corresponding to the bandwidth part.

The terminal determines, based on a plurality of pieces of first configuration information when receiving the plurality of pieces of first configuration information, a plurality of candidate first bandwidths corresponding to the bandwidth part; and selecting, from the plurality of candidate first bandwidths, the first bandwidth corresponding to the bandwidth part.

Herein, the terminal receives first control signaling, and selects, from the plurality of candidate first bandwidths based on the first control signaling, the first bandwidth corresponding to the bandwidth part. The first control signaling is: DCI or a MAC CE.

Step 302: The terminal determines, based on the first bandwidth corresponding to the bandwidth part, a frequency hopping step corresponding to an uplink channel.

In this embodiment of the present invention, the terminal determines, based on the following formula, the frequency hopping step corresponding to the uplink channel: W_{H}=nW, where

W_{H} is the frequency hopping step corresponding to the uplink channel, W is the first bandwidth corresponding to the bandwidth part, n is a proportionality coefficient, n=1/m, and m is a positive integer greater than 1.

When W_{H} is determined based on the formula W_{H}=nW, ${W}_{H} = \left⌈nW\right⌉$ or $\left⌊nW\right⌋$, where $\left⌈nW\right⌉$ represents a minimum integer greater than nW, and $\left⌊nW\right⌋$ represents a maximum integer less than nW.

Considering that the frequency hopping step has an actual meaning only when being equal to an integer multiple of a frequency domain scheduling unit, in this embodiment of the present invention, a value of W_{H} is an integer.

For example, n may be 1/2, 1/4, or the like, and different terminals may correspond to a same n value, or different terminals correspond to different n values.

In the foregoing solution, the terminal needs to first determine n or W_{H}. Specifically, the terminal determines n or W_{H} based on a preset value; or the terminal receives second configuration information, and determines n or W_{H} based on the second configuration information.

Herein, that the terminal receives second configuration information may be implemented in the following two manners:
Manner 1: The terminal receives RRC signaling that carries the second configuration information.
Manner 2: The terminal receives system information carrying the second configuration information.

In an implementation of the present invention, the second configuration information and the first configuration information are same configuration information.

In the foregoing solution, the terminal may receive one or more pieces of second configuration information.

The terminal determines n or W_{H} based on one piece of second configuration information when receiving the one piece of second configuration information. According to the claimed invention, the terminal determines the coefficient n based on the second configuration information.

The terminal determines a plurality of candidate n or W_{H} based on a plurality of pieces of second configuration information when receiving the plurality of pieces of second configuration information; and selects n or W_{H} from the plurality of candidate n or W_{H}.

Herein, the terminal receives second control signaling, and selects n or W_{H} from the plurality of candidate n or W_{H} based on the second control signaling. The second control signaling is: DCI or a MAC CE.

In an implementation of the present invention, the second control signaling and the first control signaling are same control signaling.

Step 303: The terminal determines, based on the frequency hopping step corresponding to the uplink channel, a frequency domain position used for transmitting the uplink channel.

In this embodiment of the present invention, the terminal determines a frequency domain position of the second step of frequency hopping based on a frequency domain position of the first step of frequency hopping and the frequency hopping step corresponding to the uplink channel, where the frequency domain position of the first step of frequency hopping and the frequency domain position of the second step of frequency hopping are frequency domain positions used for transmitting the uplink channel.

Herein, the terminal receives third control signaling, and determines the frequency domain position of the first step of frequency hopping based on the third control signaling. The third control signaling is: DCI or a MAC CE.

In an embodiment of the present invention, the third control signaling and at least one of the following are same control signaling: the first control signaling and the second control signaling.

The following further describes the technical solutions in the embodiments of the present invention in detail with reference to specific application examples.

### Application example 1:

In this example, for a PUCCH frequency domain, a uniform frequency hopping step is used in one bandwidth part.

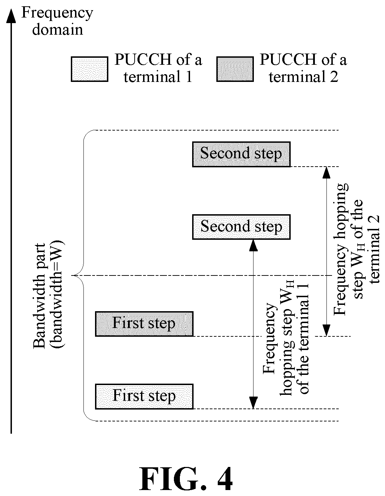

FIG. 4 is a schematic diagram 1 of a PUCCH frequency domain structure according to an embodiment of the present invention. As shown in FIG. 4, a bandwidth value of a bandwidth part or a type of bandwidth part is W, and a frequency hopping step W_{H} in the PUCCH frequency domain corresponds to the bandwidth value W of the bandwidth part. For example, W_{H}=W/2.

In an implementation, a plurality of terminals using a same bandwidth part uses same W_{H}. For example, a bandwidth value of a bandwidth part 1 is W1, and a bandwidth value of a bandwidth part 2 is W2. In this case, a plurality of terminals in the bandwidth part 1 uses same W_{H}=W1/2, and a plurality of terminals in the bandwidth part 2 uses same W_{H}=W2/2.

In another implementation, a plurality of terminals using bandwidth parts of a same value uses same W_{H}. For example, bandwidth values of the bandwidth part 1 and the bandwidth part 2 are both W. In this case, a plurality of terminals in bandwidth part 1 and the bandwidth part 2 all uses same W_{H}=W/2.

### Application example 2:

In this example, for a PUCCH frequency domain, a plurality of frequency hopping steps is used in one bandwidth part.

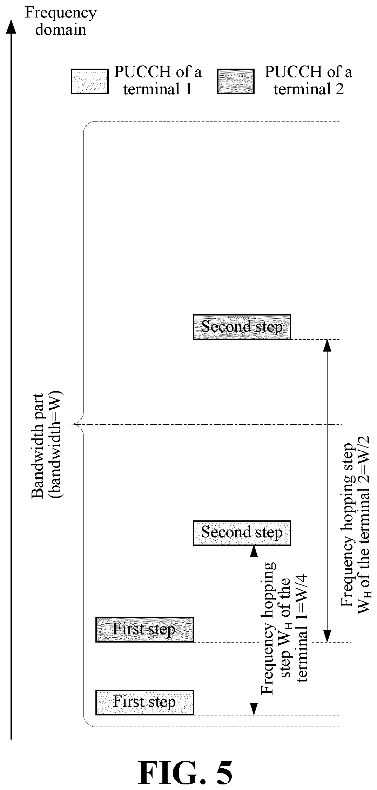

FIG. 5 is a schematic diagram 2 of a PUCCH frequency domain structure according to an embodiment of the present invention. As shown in FIG. 5, a bandwidth value of a bandwidth part or a type of bandwidth part is W, and a frequency hopping step W_{H} in the PUCCH frequency domain corresponds to the bandwidth value W of the bandwidth part. A plurality of terminals using a same bandwidth part or bandwidth parts of a same value may use different W_{H} configurations. For example, W_{H} of a terminal 1=W/4, and W_{H} of a terminal 2=W/2. In other words, the terminal 1 and the terminal 2 use different n configurations, that is, n of the terminal 1=4, and n of the terminal 2=2.

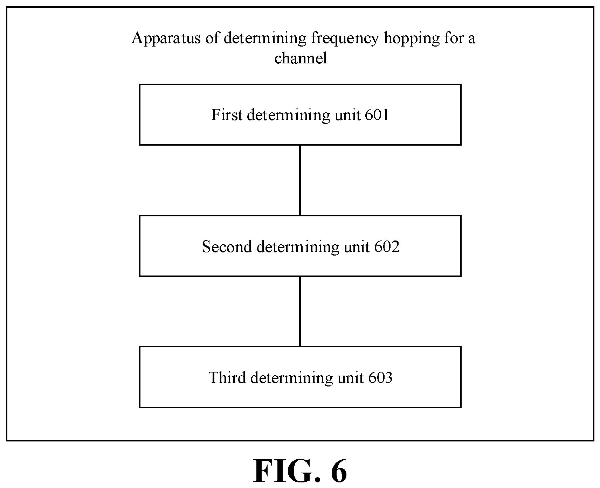

FIG. 6 is a schematic structural composition diagram 1 of an apparatus of determining frequency hopping for a channel according to an embodiment of the present invention. As shown in FIG. 6, the apparatus of determining frequency hopping for a channel includes:
a first determining unit 601, configured to determine a first bandwidth corresponding to a bandwidth part, where the first bandwidth corresponding to the bandwidth part is less than a second bandwidth corresponding to a system bandwidth;
a second determining unit 602, configured to determine, based on the first bandwidth corresponding to the bandwidth part, a frequency hopping step corresponding to an uplink channel; and
a third determining unit 603, configured to determine, based on the frequency hopping step corresponding to the uplink channel, a frequency domain position used for transmitting the uplink channel.

Persons skilled in the art should understand that, functions implemented by units in the apparatus of determining frequency hopping for a channel shown in FIG. 6 may be understood by referring to the related description of the foregoing channel frequency hopping determining method. The functions of the units in the apparatus of determining frequency hopping for a channel shown in FIG. 6 may be implemented by using a program that is run in a processor, or may be implemented by using a specific logic circuit.

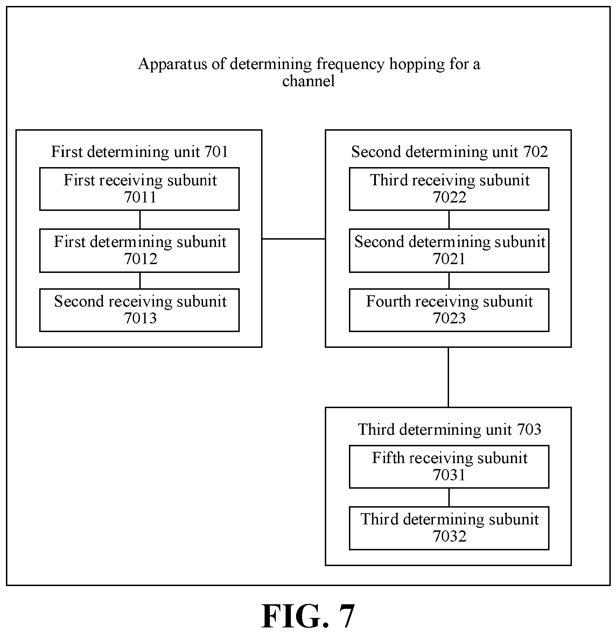

FIG. 7 is a schematic structural composition diagram 2 of an apparatus of determining frequency hopping for a channel according to an embodiment of the present invention. As shown in FIG. 7, the apparatus of determining frequency hopping for a channel includes:
a first determining unit 701, configured to determine a first bandwidth corresponding to a bandwidth part, where the first bandwidth corresponding to the bandwidth part is less than a second bandwidth corresponding to a system bandwidth;
a second determining unit 702, configured to determine, based on the first bandwidth corresponding to the bandwidth part, a frequency hopping step corresponding to an uplink channel; and
a third determining unit 703, configured to determine, based on the frequency hopping step corresponding to the uplink channel, a frequency domain position used for transmitting the uplink channel.

In an embodiment of the present invention, the first determining unit 701 includes:
a first receiving subunit 7011, configured to receive first configuration information; and
a first determining subunit 7012, configured to determine, based on the first configuration information, the first bandwidth corresponding to the bandwidth part.

In an embodiment of the present invention, the first receiving subunit 7011 is specifically configured to receive RRC signaling that carries the first configuration information; or receive system information carrying the first configuration information.

In an embodiment of the present invention, the first determining subunit 7012 is specifically configured to: determine, based on one piece of first configuration information when the one piece of first configuration information is received, the first bandwidth corresponding to the bandwidth part; determine, based on a plurality of pieces of first configuration information when the plurality of pieces of first configuration information is received, a plurality of candidate first bandwidths corresponding to the bandwidth part; and select, from the plurality of candidate first bandwidths, the first bandwidth corresponding to the bandwidth part.

In an embodiment of the present invention, the first determining unit 701 further includes:
a second receiving subunit 7013, configured to receive first control signaling; and
the first determining subunit 7012 is further configured to select, from the plurality of candidate first bandwidths based on the first control signaling, the first bandwidth corresponding to the bandwidth part.

In an embodiment of the present invention, the first control signaling is: DCI or a MAC CE.

In an embodiment of the present invention, the second determining unit 702 is specifically configured to determine, based on the following formula, the frequency hopping step corresponding to the uplink channel: W_{H}=nW, where
W_{H} is the frequency hopping step corresponding to the uplink channel, W is the first bandwidth corresponding to the bandwidth part, n is a proportionality coefficient, n=1/m, and m is a positive integer greater than 1.

When W_{H} is determined based on the formula W_{H}=nW, ${W}_{H} = \left⌈nW\right⌉$ or $\left⌊nW\right⌋$, where $\left⌈nW\right⌉$ represents a minimum integer greater than nW, and $\left⌊nW\right⌋$ represents a maximum integer less than nW.

Considering that the frequency hopping step has an actual meaning only when being equal to an integer multiple of a frequency domain scheduling unit, in this embodiment of the present invention, a value of W_{H} is an integer.

In an embodiment of the present invention, the second determining unit 702 includes:
a second determining subunit 7021, configured to determine n or W_{H} based on a preset value;
   or
a third receiving subunit 7022, configured to receive second configuration information; and
a second determining subunit 7021, configured to determine n or W_{H} based on the second configuration information.

In an embodiment of the present invention, the third receiving subunit 7022 is specifically configured to receive RRC signaling that carries the second configuration information; or receive system information carrying the second configuration information.

In an embodiment of the present invention, the second configuration information and the first configuration information are same configuration information.

In an embodiment of the present invention, the second determining subunit 7021 is specifically configured to: determine n or W_{H} based on one piece of second configuration information when the one piece of second configuration information is received; determine a plurality of candidate n or W_{H} based on a plurality of pieces of second configuration information when the plurality of pieces of second configuration information is received; and select n or W_{H} from the plurality of candidate n or W_{H}.

In an embodiment of the present invention, the second determining unit 702 further includes: a fourth receiving subunit 7023, configured to receive second control signaling; and
the second determining subunit 7021 is further configured to select n or W_{H} from the plurality of candidate n or W_{H} based on the second control signaling.

In an embodiment of the present invention, the second control signaling is: DCI or a MAC CE.

In an embodiment of the present invention, the second control signaling and the first control signaling are same control signaling.

In an embodiment of the present invention, the third determining unit 703 is specifically configured to determine a frequency domain position of the second step of frequency hopping based on a frequency domain position of the first step of frequency hopping and the frequency hopping step corresponding to the uplink channel, where
the frequency domain position of the first step of frequency hopping and the frequency domain position of the second step of frequency hopping are frequency domain positions used for transmitting the uplink channel.

In an embodiment of the present invention, the third determining unit 703 includes:
a fifth receiving subunit 7031, configured to receive third control signaling; and
a third determining subunit 7032, configured to determine the frequency domain position of the first step of frequency hopping based on the third control signaling.

In an embodiment of the present invention, the third control signaling is: DCI or a MAC CE.

In an embodiment of the present invention, the third control signaling and at least one of the following are same control signaling: the first control signaling and the second control signaling.

Persons skilled in the art should understand that, functions implemented by units in the apparatus of determining frequency hopping for a channel shown in FIG. 7 may be understood by referring to the related description of the foregoing channel frequency hopping determining method. The functions of the units in the apparatus of determining frequency hopping for a channel shown in FIG. 7 may be implemented by using a program that is run in a processor, or may be implemented by using a specific logic circuit.

If the foregoing apparatus of determining frequency hopping for a channel in the embodiments of the present invention is implemented in the form of a software function module and sold or used as an independent product, the apparatus of determining frequency hopping for a channel may be stored in a computer readable storage medium. Based on such an understanding, the technical solutions of the embodiments of the present invention essentially, or the part contributing to the existing technology may be embodied in a form of a software product. The computer software product is stored in a storage medium and includes several instructions for instructing a computer device (which may be a personal computer, a server, a network device, or the like) to perform all or a part of the methods of various embodiments of the present invention. The foregoing storage medium includes: any medium that can store program code, such as a USB flash drive, a removable hard disk, a read-only memory (ROM, Read Only Memory), a magnetic disk, or a compact disc. In this way, the embodiments of the present invention are not limited by any combination of specific hardware and software.

Correspondingly, an embodiment of the present invention further provides a computer storage medium, storing a computer executable instruction. The computer executable instruction is executed by a processor to implement the foregoing method of determining frequency hopping for a channel in the embodiments of the present invention.

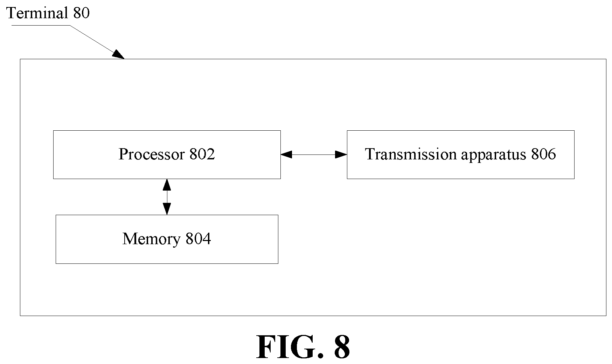

FIG. 8 is a schematic structural composition diagram of a terminal according to an embodiment of the present invention. As shown in FIG. 8, the terminal 80 may include one or more (where only one is shown in the figure) processors 802 (where the processor 802 may include but is not limited to processing apparatuses such as a microprocessor (MCU, Micro Controller Unit) and a programmable logical device (FPGA, Field Programmable Gate Array), a memory 804 configured to store data, and a transmission apparatus 806 used for a communications function. Persons skilled in the art may understand that, the structure shown in FIG. 8 is only schematic, and the structure does not constitute a limitation to the structure of the foregoing electronic apparatus. For example, the terminal 80 may further include more or fewer components than those shown in FIG. 8, or have a configuration different from that shown in FIG. 8.

The memory 804 may be configured to store a software program and a module of application software, for example, a program instruction/module corresponding to the method of determining frequency hopping for a channel in the embodiments of the present invention, and the processor 802 runs the software program and the module stored in the memory 804, to execute various function applications and data processing, that is, implement the foregoing method. The memory 804 may include a high-speed random memory, and may also include a nonvolatile memory such as one or more magnetic storage apparatuses, a flash memory, or another nonvolatile solid-state memory. In some embodiments, the memory 804 may further include memories remotely disposed relative to the processor 802, and these remote memories may be connected to the terminal 80 through a network. Examples of the network include, but are not limited to, the Internet, an intranet, a local area network, a mobile communications network, and a combination thereof.

The transmission apparatus 806 is configured to receive or send data through a network. A specific example of the network may include a wireless network provided by a communications operator of the terminal 80. In an example, the transmission apparatus 806 includes a network interface controller (NIC, Network Interface Controller) that may be connected to another network device by using a base station, thereby communicating with the Internet. In an example, the transmission apparatus 806 may be a radio frequency (RF, Radio Frequency) module that is configured to communicate with the Internet in a wireless manner.

Technical solutions set forth in the embodiments of the present invention may be in any combination when there is no conflict.

In the several embodiments provided in the present invention, it should be understood that the disclosed method and intelligent device may be implemented in other manners. The described device embodiments are merely exemplary. For example, the unit division is merely logical function division and may be other division during actual implementation. For example, a plurality of units or components may be merged or integrated into another system, or some features may be ignored or not performed. In addition, the displayed or discussed mutual couplings or direct couplings or communication connections between the components may be implemented through some interfaces, indirect couplings or communication connections between the devices or units, or electrical connections, mechanical connections, or connections in other forms.

The units described as separation parts may be or may not be physically separated. The part used as display unit may be or may not be a physical unit. That is, the units may be located in the same place, or may be distributed to many network units. Some or all of the units need to be selected according to actual requirements to implement the purpose of the solution of the embodiments.

In addition, functional units in the embodiments of the present invention may be all integrated in a second processing unit, each unit is separately used as a unit, or two or more units are integrated in a unit. The integrated unit may be implemented in a form of hardware, or may be implemented in form of hardware plus a software functional unit.

The descriptions are only specific implementations of the present invention, but are not intended to limit the protection scope of the present invention. Any variation or replacement readily figured out by persons skilled in the art within the technical scope disclosed in the present invention shall fall within the protection scope of the present invention, which is defined by the appended claims.

## Claims

1. A method of determining frequency hopping for a channel, wherein the method comprises:
receiving, by a terminal, first configuration information, and determining, based on the first configuration information, a first bandwidth corresponding to a bandwidth part, wherein the first bandwidth corresponding to the bandwidth part is less than a second bandwidth corresponding to a system bandwidth; and
determining (302), by the terminal based on the first bandwidth corresponding to the bandwidth part, a frequency hopping step corresponding to an uplink channel;
determining, by the terminal, a frequency domain position of a second step of frequency hopping based on a frequency domain position of a first step of frequency hopping and the frequency hopping step corresponding to the uplink channel, wherein the frequency domain position of the first step of frequency hopping and the frequency domain position of the second step of frequency hopping are frequency domain positions used for transmitting the uplink channel,
**characterised in that**
determining (302), by the terminal based on the first bandwidth corresponding to the bandwidth part, the frequency hopping step corresponding to the uplink channel comprises:
receiving, by the terminal, second configuration information, and determining a proportionality coefficient n based on the second configuration information; and
determining, by the terminal based on the following formula, the frequency hopping step corresponding to the uplink channel W_{H}: W_{H}=nW, W being the first bandwidth corresponding to the bandwidth part, wherein n = 1/m, and m is a positive integer greater than 1.

2. The method of determining frequency hopping for a channel according to claim 1, wherein receiving, by the terminal, the first configuration information comprises:
receiving, by the terminal, radio resource control RRC signaling that carries the first configuration information; or
receiving, by the terminal, system information carrying the first configuration information.

3. The method of determining frequency hopping for a channel according to claim 1, wherein when W_{H} is determined based on the formula W_{H}=nW, ${W}_{H} = \left⌈nW\right⌉$ or $\left⌊nW\right⌋$, wherein $\left⌈nW\right⌉$
represents a minimum integer greater than nW, and $\left⌊nW\right⌋$ represents a maximum integer less than nW.

4. An apparatus of determining frequency hopping for a channel, wherein the apparatus comprises:
a first receiving subunit (7011), configured to receive first configuration information; and
a first determining subunit (7012), configured to determine, based on the first configuration information, a first bandwidth corresponding to a bandwidth part, wherein the first bandwidth corresponding to the bandwidth part is less than a second bandwidth corresponding to a system bandwidth;
a second determining unit (602, 702), configured to determine, based on the first bandwidth corresponding to the bandwidth part, a frequency hopping step corresponding to an uplink channel;
a third determining unit (603, 703), configured to determine a frequency domain position of a second step of frequency hopping based on a frequency domain position of a first step of frequency hopping and the frequency hopping step corresponding to the uplink channel, wherein the frequency domain position of the first step of frequency hopping and the frequency domain position of the second step of frequency hopping are frequency domain positions used for transmitting the uplink channel,
**characterised in that** the second determining unit (602, 702) comprises:
a third receiving subunit (7022), configured to receive second configuration information; and
a second determining subunit (7021), configured to determine a proportionality coefficient n based on the second configuration information;
wherein the second determining unit (602, 702) is configured to determine, based on the following formula, the frequency hopping step corresponding to the uplink channel W_{H}: W_{H}=nW, W being the first bandwidth corresponding to the bandwidth part, wherein n = 1/m, and m is a positive integer greater than 1.

5. The apparatus of determining frequency hopping for a channel according to claim 4, wherein the first receiving subunit (7011) is specifically configured to:
receive RRC signaling that carries the first configuration information; or
receive system information carrying the first configuration information.

6. The apparatus of determining frequency hopping for a channel according to claim 4, wherein when W_{H} is determined based on the formula W_{H}=nW, ${W}_{H} = \left⌈nW\right⌉$ or $\left⌊nW\right⌋$, wherein
$\left⌈nW\right⌉$ represents a minimum integer greater than nW, and $\left⌊nW\right⌋$ represents a maximum integer less than nW.

7. A computer storage medium, storing computer executable instructions which, when executed by a computer, cause the computer to perform the steps in the method according to any one of claims 1 to 3.

## Patentansprüche

1. Verfahren zum Bestimmen des Frequenzsprungverfahrens für einen Kanal, wobei das Verfahren umfasst:
Empfangen erster Konfigurationsinformationen durch ein Endgerät und Bestimmen einer ersten Bandbreite, die einem Bandbreitenteil entspricht, basierend auf den ersten Konfigurationsinformationen, wobei die erste Bandbreite, die dem Bandbreitenteil entspricht, kleiner ist als eine zweite Bandbreite, die einer Systembandbreite entspricht; und
Bestimmen (302) eines Frequenzsprungschritts, der einem Uplink-Kanal entspricht, durch das Endgerät basierend auf der ersten Bandbreite, die dem Bandbreitenteil entspricht;
Bestimmen einer Frequenzbereichsposition eines zweiten Schritts des Frequenzsprungverfahrens durch das Endgerät basierend auf einer Frequenzbereichsposition eines ersten Schritts des Frequenzsprungverfahrens und dem Frequenzsprungschritt, der dem Uplink-Kanal entspricht, wobei die Frequenzbereichsposition des ersten Schritts des Frequenzsprungverfahrens und die Frequenzbereichsposition des zweiten Schritts des Frequenzsprungverfahrens Frequenzbereichspositionen sind, die zum Übertragen des Uplink-Kanals verwendet werden,
**dadurch gekennzeichnet, dass**:
das Bestimmen (302) des Frequenzsprungschritts, der dem Uplink-Kanal entspricht, durch das Endgerät basierend auf der ersten Bandbreite, die dem Bandbreitenanteil entspricht, umfasst:
Empfangen zweiter Konfigurationsinformationen durch das Endgerät und Bestimmen eines Proportionalitätskoeffizienten n basierend auf den zweiten Konfigurationsinformationen; und
Bestimmen des Frequenzsprungschritts W_{H}, der dem Uplink-Kanal entspricht, durch das Endgerät basierend auf der folgenden Formel: W_{H}=nW, wobei W die erste Bandbreite ist, die dem Bandbreitenteil entspricht, wobei n = 1/m und m eine positive ganze Zahl größer als 1 ist.

2. Verfahren zum Bestimmen des Frequenzsprungs für einen Kanal nach Anspruch 1, wobei das Empfangen der ersten Konfigurationsinformationen durch das Endgerät umfasst:
Empfangen von Funkressourcensteuerung-(RRC-)Signalisierung, welche die ersten Konfigurationsinformationen trägt, durch das Endgerät; oder
Empfangen von Systeminformationen, welche die ersten Konfigurationsinformationen tragen, durch das Endgerät.

3. Verfahren zum Bestimmen des Frequenzsprungs für einen Kanal nach Anspruch 1, wobei, wenn W_{H} basierend auf der Formel W_{H}=nW bestimmt wird, ${W}_{H} = \left⌈nW\right⌉$ oder $\left⌊nW\right⌋$ ist, wobei
$\left⌈nW\right⌉$ eine minimale ganze Zahl größer als nW darstellt und $\left⌊nW\right⌋$ eine maximale ganze Zahl kleiner als nW darstellt.

4. Einrichtung zum Bestimmen des Frequenzsprungverfahrens für einen Kanal, wobei die Einrichtung umfasst:
eine erste Empfangsuntereinheit (7011), die dafür konfiguriert ist, erste Konfigurationsinformationen zu empfangen; und
eine erste Bestimmungsuntereinheit (7012), die dafür konfiguriert ist, basierend auf den ersten Konfigurationsinformationen eine erste Bandbreite zu bestimmen, die einem Bandbreitenteil entspricht, wobei die erste Bandbreite, die dem Bandbreitenteil entspricht, kleiner ist als eine zweite Bandbreite, die einer Systembandbreite entspricht; und
eine zweite Bestimmungseinheit (602, 702), die dafür konfiguriert ist, basierend auf der ersten Bandbreite, die dem Bandbreitenteil entspricht, einen Frequenzsprungschritt zu bestimmen, der einem Uplink-Kanal entspricht;
eine dritte Bestimmungseinheit (603, 703), die dafür konfiguriert ist, basierend auf einer Frequenzbereichsposition eines ersten Schritts des Frequenzsprungverfahrens und dem Frequenzsprungschritt, der dem Uplink-Kanal entspricht, eine Frequenzbereichsposition eines zweiten Schritts des Frequenzsprungverfahrens zu bestimmen, wobei die Frequenzbereichsposition des ersten Schritts des Frequenzsprungverfahrens und die Frequenzbereichsposition des zweiten Schritts des Frequenzsprungverfahrens Frequenzbereichspositionen sind, die für die Übertragung des Uplink-Kanals verwendet werden,
**dadurch gekennzeichnet, dass** die zweite Bestimmungseinheit (602, 702) umfasst:
eine dritte Empfangsuntereinheit (7022), die dafür konfiguriert ist, zweite Konfigurationsinformationen zu empfangen; und
eine zweite Bestimmungsuntereinheit (7021), die dafür konfiguriert ist, einen Proportionalitätskoeffizienten n basierend auf den zweiten Konfigurationsinformationen zu bestimmen;
wobei die zweite Bestimmungseinheit (602, 702) dafür konfiguriert ist, den Frequenzsprungschritt W_{H}, der dem Uplink-Kanal entspricht, basierend auf der folgenden Formel zu bestimmen: W_{H}=nW, wobei W die erste Bandbreite ist, die dem Bandbreitenteil entspricht, wobei n = 1/m und m eine positive ganze Zahl größer als 1 ist.

5. Einrichtung zum Bestimmen des Frequenzsprungverfahrens für einen Kanal nach Anspruch 4, wobei die erste Empfangsuntereinheit (7011) speziell dafür konfiguriert ist:
RRC-Signalisierung zu empfangen, welche die ersten Konfigurationsinformationen trägt; oder
Systeminformationen zu empfangen, welche die ersten Konfigurationsinformationen tragen.

6. Einrichtung zum Bestimmen des Frequenzsprungverfahrens für einen Kanal nach Anspruch 4, wobei, wenn W_{H} basierend auf der Formel W_{H}=nW bestimmt wird, ${W}_{H} = \left⌈nW\right⌉$ oder $\left⌊nW\right⌋$ ist, wobei
$\left⌈nW\right⌉$ eine minimale ganze Zahl größer als nW darstellt und $\left⌊nW\right⌋$ eine maximale ganze Zahl kleiner als nW darstellt.

7. Computerspeichermedium, das computerausführbare Anweisungen speichert, die, wenn sie durch einen Computer ausgeführt werden, den Computer veranlassen, die Schritte in dem Verfahren nach einem der Ansprüche 1 bis 3 durchzuführen.

## Revendications

1. Procédé de détermination d'un saut de fréquence pour un canal, dans lequel le procédé comprend :
la réception, par un terminal, d'une première information de configuration, et la détermination, sur la base de la première information de configuration, d'une première bande passante qui correspond à une partie de bande passante, la première bande passante qui correspond à la partie de bande passante étant inférieure à une seconde bande passante qui correspond à une bande passante de système ; et
la détermination (302), par le terminal sur la base de la première bande passante qui correspond à la partie de bande passante, d'un palier de saut de fréquence qui correspond à un canal en liaison montante ;
la détermination, par le terminal, d'une position dans le domaine fréquentiel d'un second palier de saut de fréquence sur la base d'une position dans le domaine fréquentiel d'un premier palier de saut de fréquence et du palier de saut de fréquence qui correspond au canal en liaison montante, dans lequel la position dans le domaine fréquentiel du premier palier de saut de fréquence et la position dans le domaine fréquentiel du second palier de saut de fréquence sont des positions dans le domaine fréquentiel utilisées pour transmettre le canal en liaison montante,
**caractérisé en ce que**
la détermination (302), par le terminal sur la base de la première bande passante qui correspond à la partie de bande passante, du palier de saut de fréquence qui correspond au canal en liaison montante comprend :
la réception, par le terminal, d'une seconde information de configuration, et la détermination d'un coefficient de proportionnalité n sur la base de la seconde information de configuration ; et
la détermination, par le terminal sur la base de la formule suivante, du palier de saut de fréquence qui correspond au canal en liaison montante W_{H} : W_{H} = nW, W étant la première bande passante qui correspond à la partie de bande passante, dans lequel n = 1/m, et m est un entier positif supérieur à 1.

2. Procédé de détermination d'un saut de fréquence pour un canal selon la revendication 1, dans lequel la réception, par le terminal, de la première information de configuration comprend :
la réception, par le terminal, d'une signalisation de commande des ressources radio RRC qui transporte la première information de configuration ; ou
la réception, par le terminal, d'une information de système transportant la première information de configuration.

3. Procédé de détermination d'un saut de fréquence pour un canal selon la revendication 1, dans lequel, quand W_{H} est déterminé sur la base de la formule W_{H} = nW, ${W}_{H} = \left⌈nW\right⌉$ ou $\left⌊nW\right⌋$, dans lequel
$\left⌈nW\right⌉$ représente un entier minimum supérieur à nW, et $\left⌊nW\right⌋$ représente un entier maximum inférieur à nW.

4. Appareil de détermination d'un saut de fréquence pour un canal, dans lequel l'appareil comprend :
une première sous-unité de réception (7011), configurée pour recevoir une première information de configuration ; et
une première sous-unité de détermination (7012), configurée pour déterminer, sur la base de la première information de configuration, une première bande passante qui correspond à la partie de bande passante, dans lequel la première bande passante qui correspond à la partie de bande passante est inférieure à une seconde bande passante qui correspond à une bande passante de système ;
une deuxième unité de détermination (602, 702), configurée pour déterminer, sur la base de la première bande passante qui correspond à la partie de bande passante, un palier de saut de fréquence qui correspond à un canal en liaison montante ;
une troisième unité de détermination (603, 703), configurée pour déterminer une position dans le domaine fréquentiel d'un second palier de saut de fréquence sur la base d'une position dans le domaine fréquentiel d'un premier palier de saut de fréquence et du palier de saut de fréquence qui correspond au canal en liaison montante, dans lequel la position dans le domaine fréquentiel du premier palier de saut de fréquence et la position dans le domaine fréquentiel du second palier de saut de fréquence sont des positions dans le domaine fréquentiel utilisées pour transmettre le canal en liaison montante,
**caractérisé en ce que** la deuxième unité de détermination (602, 702) comprend :
une troisième sous-unité de réception (7022), configurée pour recevoir une seconde information de configuration ; et
une seconde sous-unité de détermination (7021), configurée pour déterminer un coefficient de proportionnalité n sur la base de la seconde information de configuration ;
dans lequel la deuxième unité de détermination (602, 702) est configurée pour déterminer, sur la base de la formule suivante, le palier de saut de fréquence qui correspond au canal en liaison montante W_{H} : W_{H} = nW, W étant la première bande passante qui correspond à la partie de bande passante, dans lequel n = 1/m, et m est un entier positif supérieur à 1.

5. Appareil de détermination d'un saut de fréquence pour un canal selon la revendication 4, dans lequel la première sous-unité de réception (7011) est spécifiquement configurée pour :
recevoir une signalisation RRC qui transporte la première information de configuration ; ou
recevoir une information de système transportant la première information de configuration.

6. Appareil de détermination d'un saut de fréquence pour un canal selon la revendication 4, dans lequel, quand W_{H} est déterminé sur la base de la formule W_{H} = nW, ${W}_{H} = \left⌈nW\right⌉$ ou $\left⌊nW\right⌋$, dans lequel
$\left⌈nW\right⌉$ représente un entier minimum supérieur à nW, et $\left⌊nW\right⌋$ représente un entier maximum inférieur à nW.

7. Support de stockage informatique, stockant des instructions exécutables par ordinateur qui, lorsqu'elles sont exécutées par un ordinateur, amènent l'ordinateur à réaliser les étapes du procédé selon l'une quelconque des revendications 1 à 3.
